# EUROPEAN PATENT SPECIFICATION

(11) **EP 1 810 638 B1**
(45) Date of publication and mention of the grant of the patent: **17.06.2009**
(21) Application number: 06001465.1
(22) Date of filing: 24.01.2006
(51) Int. Cl.: A61C 5/06, B05C 17/005

(54) **Piston for capsule, method of forming such piston, and capsule therewith**
Kolben für Kapsel, Verfahren zur Herstellung eines solchen Kolbens, und zugehörige Kapsel
Piston pour capsule, méthode pour fabriquer cedit piston, et capsule associée

(43) Date of publication of application: 25.07.2007
(73) Proprietor: 3M ESPE AG, 82229 Seefeld (DE)
(72) Inventor: Müller, Thomas, 81479 München (DE); Hautmann, Marika, 82319 Starnberg (DE); Wagner, Ingo, 82237 Wörthsee (DE)
(74) Representative: Vossius & Partner

(56) References cited:
- EP-A- 1 340 472
- DE-A1- 1 938 028
- GB-A- 486 638
- US-A- 4 340 367
- US-A- 5 816 805
- US-A1- 2004 152 042

## Description

### Field of the Invention

The invention is directed to a piston or plunger for a material delivery system and a delivery system, such as a cartridge delivery system or syringe for storage and dispensing of a viscous or pasty material, in which the system includes a piston or plunger. The piston or plunger is preferably provided for a unit dose dental capsule for the direct placement of a dental material, such as a light-curable tooth filling material, into a desired location.

### Background of the Invention

Dental materials for restoring teeth often have a pasty consistency. As a result, dental professionals encountered considerable difficulties in the accurate placement of such a material into or onto a patient's tooth. The dental professional applied the material to the tooth with a spatula or similar tool, but this technique sometimes resulted in the filling having voids within the final restoration, which is undesirable because voids affect the strength of the filling. Voids could be caused either by the inability of the user to pack such a material into small areas of a tooth that are difficult to reach, or by the entrainment of air and thus the formation of air bubbles in the composite material as it was being placed. A further difficulty that was encountered by the dentist was that such composite material had a tendency to stick to the palate or spatula, causing the material to be pulled away from the tooth surface when the dentist removed the palate or spatula. Also, if a dentist used a metal instrument to place the composite material, there was a tendency of the instrument to react with and discolour the composite.

The problems initially encountered by the dentist in placing such composite resins were solved by the development of a syringing technique for the placement of such composite materials. This syringing technique was disclosed in U.S. Patent No. 3,581,399. The syringing technique and unit dose capsules disclosed in this document were followed by other capsule improvements as disclosed in U.S. Patent Nos. 4,330,280, 4,384,853, 4,391,590, 4,767,326, 4,963,093, 4,969,816, 5,083,921, 5,100,320, 5,129,825, 5,165,890, 5,172,807, 5,322,440, 5,460,523 and 5,707,234. These known capsule constructions have been proven satisfactory for placing composite materials having a pasty consistency.

Today such capsules are provided with a reservoir portion, for containing a predetermined supply of dental material, and a discharge nozzle with a passageway for precisely dispensing material at a desired location. In such conventional capsules, the reservoir portion typically has a cross-sectional area which is substantially greater than the cross-sectional area of the passageway of the nozzle. This configuration provides sufficient volume for storing material in the reservoir portion as well as precise dispensing of the material through the relatively small passageway of the nozzle. With conventional capsule constructions, it is typically not possible to dispense substantially all of the dental material from the capsule. Because tooth filling materials are relatively expensive, this waste is costly.

It is generally desired to use capsules having a small discharge nozzle with a rather small passageway to facilitate precise application of the material to a desired location. On the other hand if the materials to be dispensed have a rather high viscosity it is also desired to have a passageway that is rather large to avoid the necessity for the application of high forces by a user to extrude the material from the capsule.

There is a group of composite dental materials that are formulated with a substantial filler content (e.g., more than 78% filler, e.g. quartz), whereby such highly filled or ultra-dense materials are rendered "packable" or "condensable" to imitate metal amalgam restoratives in consistency. Such ultra-dense or condensable composite materials are particularly suitable for restoring the back or posterior teeth that are subject to high chewing forces. However, high forces would be required to dispense these materials through a capsule having a discharge nozzle with a small passageway. Therefore those highly viscous materials are typically used with capsules having a rather large passageway, in which on the other hand a higher amount of wasted paste remains after the capsule has been used.

To permit the delivery of these quite expensive and highly viscous filling materials, with minimal waste, several attempts have been made to improve on known delivery devices.

WO 01/72235 A1 is directed to a dental cartridge for dispensing a dental substance. The dental cartridge has a dispensing region which has a substantially constant internal diameter. The dispensing region is at least partially curved. A deformable or flexible and cylindrical piston is provided and arranged to pass through the curved portion of the dispensing region.

EP 0 848 935 A1 teaches a syringe for light-setting dental masses. It has an ejection body with an elastic piston at the shape of the outflow connection. Only its trailing end has a fixed shape. The ejection body may be manufactured using a twin-layer injection moulding process. It has a hard layer and an elastic layer which forms the end section to be fitted to the outflow connection. The ejection body may be of silicone or another elastomer with a Shore hardness of 10-90 and especially 20-60.

DE 100 17 475 is directed to a receptacle for a filling material, which is provided with a plunger which includes a deformable material on a portion of the plunger which faces the nozzle. In one embodiment, the plunger can be a double plunger (a two-part plunger) displaceable axially into a defined end position in the direction of the nozzle, a deformable portion of which penetrates into the outlet channel of the nozzle, forcing out dental filling material located there.

JP 08089515 describes a syringe for dental paste and root canal filler having a plunger with a front end of a plunger shaft provided with an ejection tip consisting of a flexible material such as elastomer. The ejection tip is bent in a cannula part to eject treating material encapsulated in the cylinder to decrease the residual amount left in the cylinder.

US 2004/0152042 discloses a device for the treatment of periodontal disease. The device has a barrel in which a plunger is enclosed. The barrel has a body portion and a tube portion with the tube portion being angled relative to a body portion. The plunger has head and tail portions. The head portion, initially not bent or angled, can be moved within the tube portion of the barre whereby it conforms to the shape of the barrel.

US-A-4,340367 discloses a dental amalgam dispenser unit having a detachable head. The head has a bore for receiving the amalgam and a plunger tip for advancing the amalgam. The plunger tip is connected to a plunger rod by a wire cable. For guidance of the wire cable guide beads are mounted along the cable.

### Summary of the invention

The present invention is specified in the claims.

The present invention includes a piston for a dental capsule with the piston being displaceable within the capsule, the piston comprising a front section with a longitudinal axis, and a rear section having a longitudinal axis. At least a portion of the front section extending along its longitudinal axis can be inclined, moved, angled or bent in at least one dimension relative to the longitudinal axis of the rear section. This inclination can be bending, tilting, or other path, corresponding to the shape of the portion of the capsule in which the piston is contained. The shape or structure of the piston's components may be provided before, during or after its manufacturing so that the individual components of the piston's front section have an essentially constant, predetermined shape while the piston pushes the material forward, and do not change shape due to their kind of material properties as in the prior art.

In another embodiment, the invention provides a capsule with such a piston and at least one barrel, the piston being at least partially displaceable within the barrel so that material which may be contained in the filled capsule can be pushed out of the barrel. Preferably the front portion of the barrel comprises a passageway terminating in an outlet for dispensing material from the capsule.

It is another aspect of the present invention to provide methods of forming and using the piston and the capsule.

In a preferred embodiment the piston comprises a front section and a rear section, wherein the entire front section is movable relative to the rear section. Preferably the front section having a longitudinal axis and the rear section having a longitudinal axis can be moved and/or inclined and/or bent relative to each other.

The piston comprises a front section and a rear section, wherein at least a part of the front section extending along a longitudinal axis can be moved (e.g. inclined) relative to the longitudinal axis of the rear section.

The outer diameter of the front section of the piston is smaller than the outer diameter of at least part of the rear section of the piston.

In an embodiment of the piston, a joint is provided for connecting the front section with the rear section. The joint is preferably any type of mechanical joint such as a joint allowing two-dimensional movement of the front section relative to the rear section, or three-dimensional movement (also permitting the front section to move toward or away from the rear section of the piston).

In this context "joint" means that the front section and the rear section of the piston are either connected to each other (e. g. by a positive fitting) or that mentioned parts are adapted to be in contact with one another at least when the piston is displaced. Thus, a "joint" as that term is used relative to the present invention includes two separable components of a ball and socket, as well as two normally inseparable components of a hinge or living hinge.

The term "living hinge" comprises a hinge that extends laterally (like a commonly used hinge) with a portion narrowed at least in one dimension to permit flexing along that dimension.

In an embodiment the piston comprises a front section, a rear section and a living hinge for connecting the front and rear sections. The piston is preferably integrally molded (molded as one piece) with two connected sections, wherein the living hinge is preferably formed as a narrowed portion between the front section and the rear section and, because it is a narrowed portion, is preferably substantially more flexible than either section.

In an embodiment the piston comprises a front section, a rear section and a joint for connecting the front and rear sections. At least a portion of the joint is a ball joint, meaning that either the front or the rear section of the piston has a negative ball-shaped recess forming a concave bearing shell and the other section has a corresponding convex ball-shaped bearing member, wherein bearing shell and bearing member form a joint when fitted together.

In a further embodiment the ball joint comprises a positive fitting between the front section and the rear section. In this case the bearing shell encloses more than a hemisphere of the ball-shaped bearing member, thus retaining the ball within the shell under both compressive and normal tensile forces.

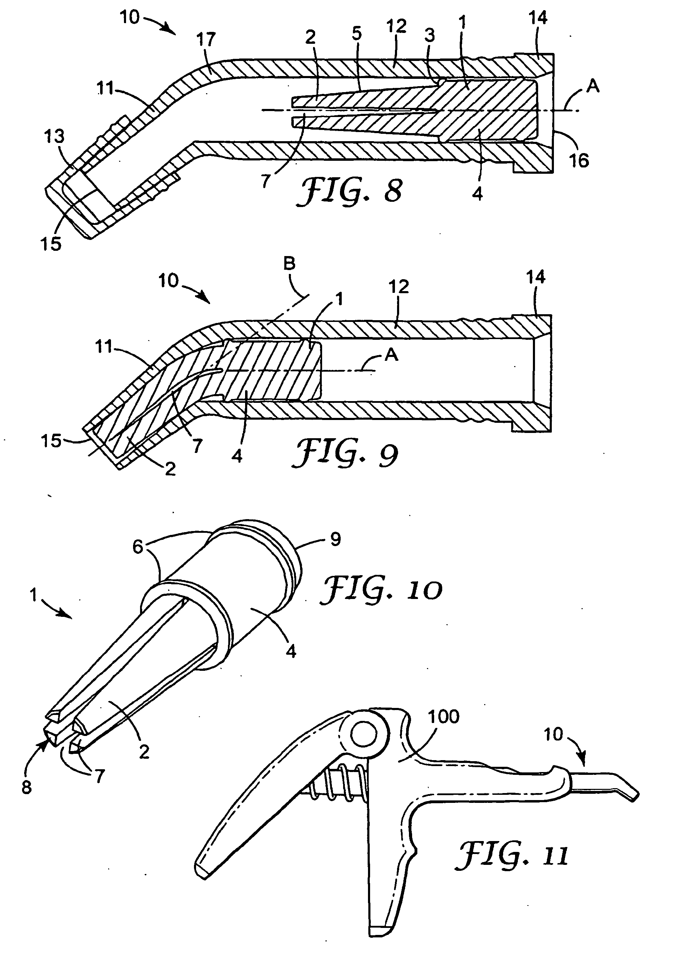

In an embodiment, at least a portion of the front section of the piston comprises at least one longitudinal slot, preferably extending from the front end of the piston towards the rear end of the piston. More preferably the longitudinal slot completely splits the front section at least along its length towards the rear end of the piston. Even more preferably the entire front section comprises a plurality of longitudinal slots positioned essentially radially and equidistantly around the perimeter of the front section. Preferably there are 4 such slots or 2 crossing slots dividing the front section into quarters along the length thereof, as shown in Figure 10. Grooves, notches, or other structural modifications can be provided alternatively or additionally. These slots or structural modifications provide flexibility to the front end of the piston to enable to allow the front section to be inclined relative to the rear section of the piston. They may also enable the front section to conform to the dimensions of the passageway in the front portion of the barrel. It is pointed out that the flexibility of the front end of the piston is provided by the structural modifications and not only by the material properties as in the prior art.

The piston is and can be made from at least one common material, preferably by a plastic material such as polypropylene or polyethylene. Alternatively polyoxymethylene, polyamide, polystyrene, polycarbonate, polypropylene, polyethylene or polybutadienterephtalate or other thermoplastic or thermosetting materials may be used. Preferably the Shore Hardness of a material used for the piston is between D40 and D100, and more preferably between D60 and D65.

Preferably, the front and the rear sections of the piston can be made out of the same material, rather than from different materials for the front section and the rear section as in the prior art. With this respect "material" also embraces blends, compounds and other materials made from more than one basic material. However it may also be provided that the front and rear section are made of different materials.

Preferably the piston is made out of an injection-moldable material, wherein "injection-moldable" as that term is used relative to the present invention includes processing of thermoplastic as well as of thermosetting materials.

The frontmost portion of the front section of the piston is preferably formed such that its outer cross-section decreases along the longitudinal axis from the rear towards the front end. More preferably, the frontmost portion is essentially conical.

The present invention further relates to a capsule having a piston of the type mentioned above.

The capsule comprises a barrel having front and rear portions, wherein the front portion has a longitudinal axis that is angled relative to the longitudinal axis of the rear portion. A piston having a front section is disposed within the barrel. In the embodiments of the piston other than the one having a front section with slots the front section of the piston does not substantially conform to the shape of the barrel when it is positioned in the rear portion of the barrel, but does substantially conform to the shape of the barrel when the piston is positioned in the front portion of the barrel, wherein the shape of the piston's front section is substantially the same when positioned in either portion of the barrel because it is generally not resilient and thus retains its shape.

In the embodiment having a front section with slots as described above, the front section of the piston does not substantially conform to the shape of the barrel when it is positioned in the rear portion of the barrel, but does substantially conform to the shape of the barrel when the piston is positioned in the front portion of the barrel, wherein the shape of the individual parts of the piston's front section are substantially the same when positioned in either portion of the barrel because they are generally not resilient and thus retain their shape.

Preferably the rear portion of the barrel is straight at least over a part of its length, wherein the straight portion extends along a longitudinal axis. More preferably the straight portion is cylindrical. Preferably a piston as mentioned above is accommodated in the rear portion of the barrel and is movable within the barrel to extrude the material from the barrel.

Preferably the passageway of the front portion of the barrel at least along a portion thereof decreases in its inner dimension (e.g. is tapered) towards the outlet of the capsule, so that an inner conical portion can be formed corresponding to the one of the piston's front section mentioned above or vice versa.

Preferably a longitudinal axis of at least a portion of the passageway is inclined with respect to a longitudinal axis of the rear portion and the remaining part of the front portion. This is usually done in order to allow the dental professional to appropriately place the dental material onto or into the tooth of a patient.

Preferably the front section of the piston and the passageway of the front portion of the barrel essentially correspond in shape so that when the front section of the piston is in the front portion of the barrel, the dead space in the passageway can be minimized.

Preferably at least a portion of the passageway is straight, wherein the straight part of the passageway is inclined with respect to a longitudinal axis of the rear portion and the remaining part of the front portion of the barrel.

Preferably the inner dimension of the rear part of the barrel is greater than the greatest inner dimension of the straight part of the passageway.

Preferably the inner cross-section of the straight portion of the passageway is cylindrical over at least a part of its length.

The outlet of the capsule may be sealed with a removable cap and can be provided with one or more flanges or bulges to provide a secure and tight fit between the cap and the outlet.

The capsule has preferably an attachment member (e. g. an outwardly annular flange located at the rear end of the capsule) for attaching it to a handling device that includes a plunger, such as a capsule applicator or capsule dispenser (further referred to as a dispensing device).

The shape of the piston can be provided by the use of a particular mold during an injection molding manufacturing process, or any computer-controlled machining or cutting process, such as a turning or milling process, or other material removal processes, such as grinding. Other processes resulting in the same or similar effect are also embraced by the present invention.

The piston is preferably manufactured by injection molding. In a preferred process the front section of the piston and the rear section of the piston are molded by two-component injection molding. In this context two-component injection molding comprises the steps of
- molding the first section (e.g. the front or the rear section),
- and molding the second section,
wherein during molding of the second section at least a part of the surface of the first section forms a wall of the mold for the second section.

It may also be provided that the front section and the rear section of the piston are manufactured in separate steps and are subsequently assembled or attached to each other, for example by snapping together the ball-and-shell joint arrangement described above.

It may further be provided that either the front or the rear section of the piston is pre-manufactured (e. g. molded or machined) and the other section is added subsequently by a molding step, wherein the pre-manufactured first section is used as an insert in the mold for the second section.

It may also be provided that the piston is manufactured from more than two sections, wherein the above-mentioned methods or a combination thereof can be used.

It is a further preferred embodiment of the present invention to provide a capsule with at least a part of it being filled with dental material and more preferably with tooth-filling material (e.g. light-curable composite filling material). However the capsule may also be filled with a dental impression material or a dental temporary crown or bridge material.

The present invention is also directed in another aspect to a kit comprising a plurality of capsules of the type described herein, filled with different dental materials or dental materials with different characteristics, e.g. dental filling materials having different colour shades, viscosity, and so on.

The present invention is also directed in a further aspect of the invention to a kit comprising at least one dispenser and at least one capsule. Preferably the kit comprises a dispenser and a plurality of capsules, wherein the capsules may be filled with different dental materials or dental materials with different characteristics as mentioned above.

The dispenser may be a dispenser of the type currently available from 3M^{™} ESPE^{™} dental division under the designation 3M^{™} ESPE^{™} Restorative Dispenser for Capsules.
The kit may also comprise dental bondings, etching gels and ancillary items.

The invention comprises also a combination of any single feature or any group of features of different embodiments mentioned above.

The present invention has the advantage of providing a piston of a relatively rigid material. During its use the piston preferably does not compress axially (along its longitudinal axis) even in response to considerable internal pressure on the front section, and is able to provide a more direct feel for a user so that any movement of the piston initiated by the user will result in a proportional amount of material being dispensed. This is in contrast to capsules in which a more elastomeric part of a piston tends to be compressed by such forces, as a result of which an uncertain amount of material may be dispensed. Because of this characteristic the piston of the present invention also reduces the undesirable "after-flow" of paste caused by expansion of an elastomeric part of a piston when application forces are released.

Further preferably, the front and the rear sections of the piston can be made out of the same material rather than from different materials as described. This makes the manufacturing more effective and less expensive.

Furthermore the piston of the present invention can be used with conventional capsule designs. In this way improvement is provided without the need to change the existing capsules, which is much less expensive relative to solutions found in prior art. In addition, as the users can stay with the proven capsule design, less effort is required for converting products to the new capsule system.

It is an advantage of the present invention to be able to provide a piston which avoids relatively large dead spaces particularly in front portions of capsules where material remains after use. The present invention thus minimizes waste of material for conventional capsules used for dental materials, such as dental filling materials.

The present invention has the further preferred advantages of providing a capsule construction particularly suitable for effecting the placement of ultra-dense or highly-filled composite resin dental materials by the syringing technique. Moreover, the formation of voids in a patient's tooth restoration are minimized because the material can be directed to the bottom of a cavity and filled from that point outward.

### Brief Description of the Drawings

Preferred embodiments of the present invention are shown in the following figures:
Fig. 1 shows a perspective view of one embodiment of a dental capsule according to the present invention.
Fig. 2 shows a cross-section through a capsule with a first embodiment of a piston in accordance with the present invention.
Fig. 3 shows the capsule with the piston according to Fig. 2 with the piston being displaced more to a front portion of the barrel than in Fig. 2.
Fig. 4 shows a cross-section through a capsule with a second embodiment of a piston in accordance with the present invention.
Fig. 5 shows the capsule with the piston according to Fig. 4 with the piston being displaced more to a front portion of the barrel than in Fig. 4.
Fig. 6 shows a cross-section through a capsule with a third embodiment of a piston in accordance with the present invention.
Fig. 7 shows the capsule with the piston according to Fig. 6 with the piston being displaced more to a front portion of the barrel than in Fig. 6.
Fig. 8 shows a cross-section through a capsule with a fourth embodiment of a piston in accordance with the present invention.
Fig. 9 shows the capsule with the piston according to Fig. 8 with the piston being displaced more to a front portion of the barrel than in Fig. 8.
Fig. 10 shows a perspective view of a piston according to a fourth embodiment of the present invention.
Fig. 11 shows a capsule inserted into a dispensing device.

### Detailed Description of the Invention

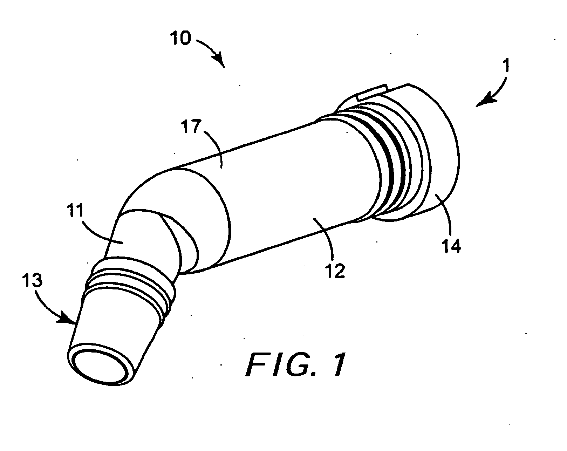

Fig. 1 shows capsule 10 with a barrel 17 having a front portion 11 and a rear portion 12.

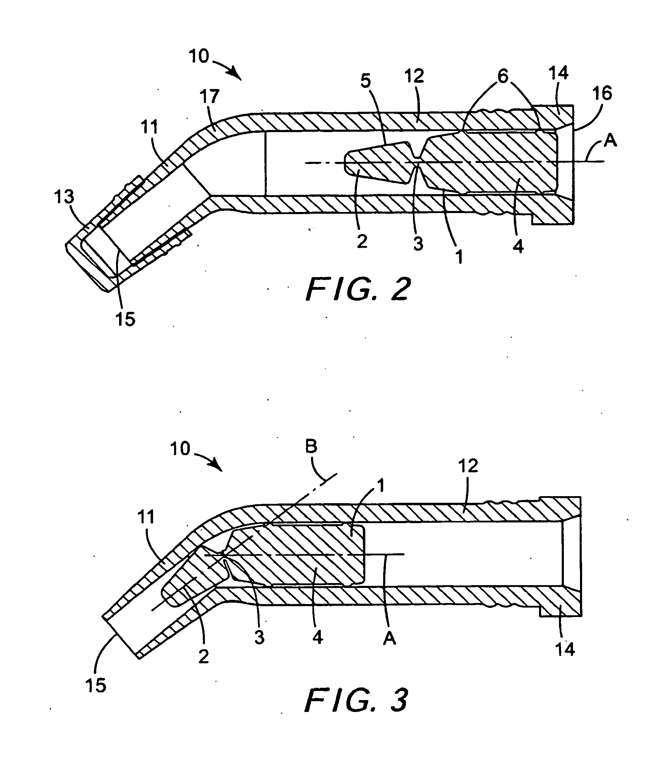

Figures 2 to 9 show a cross-section through the capsule 10 with a piston 1 of different embodiments and at different positions.

As shown in Figures 2 and 3, the piston 1 has at least a front section 2 with a longitudinal axis B (Fig. 3) and a rear section 4 with a longitudinal axis A. The piston 1 further has one or more surface(s) 5 which is or are the surface(s) facing the material stored in the barrel 17. In embodiments in which the piston 1 has one or more slots, grooves, or other structures provided (as described above), the available volume and extent of the surfaces may be larger due to those structures. The piston 1 shown has a circular cross-section, but can also have a non-circular cross-section. The barrel 17 normally has a cross-sectional shape corresponding to the cross-sectional shape of the piston 1. It may also be possible that the piston itself is for example cylindrical, but that o-rings or other sealing members give it a larger effective diameter, or a different effective cross-sectional shape.

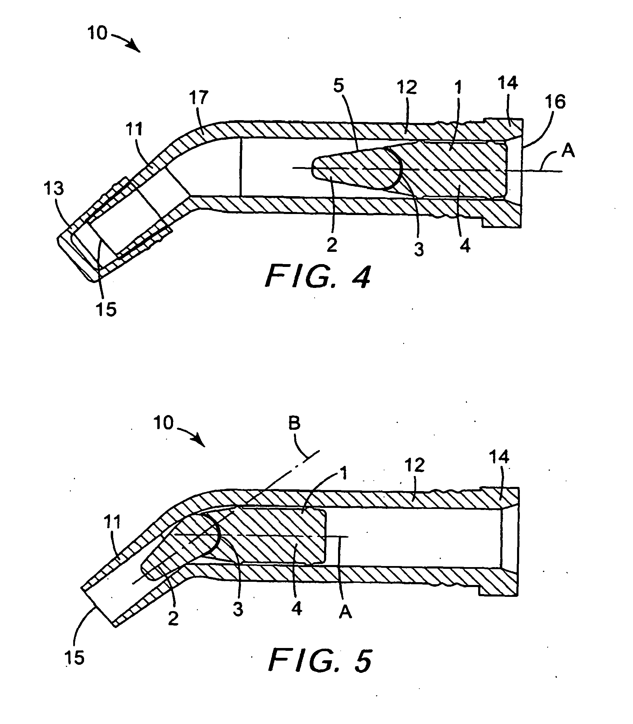

The piston 1 is provided with a joint 3, shown in this embodiment as a living hinge connecting the front section 2 with the rear section 4. In the embodiment shown the cross-section of the joint 3 is minimized (e.g. constricted) in at least one dimension relative to the dimensions of the front section 2 and the rear section 4 of the piston 1. The front section 2 and the rear section 4 can be moved relative to each other particularly with a sideways or angular movement. In Figures 2 and 3 (as well as in the remaining figures 4 to 9) a longitudinal axis A of the rear section 4 is shown. A longitudinal axis B of the front section 2 is also shown (in Figs. 3, 5, 7 and 9), and the front section 2 can be inclined relative to the rear section 4 which is apparent from the angular relationship between A and B. The inclination can be a sharp angular inclination around the joint 3 and/or a bend (as shown in Fig. 9).

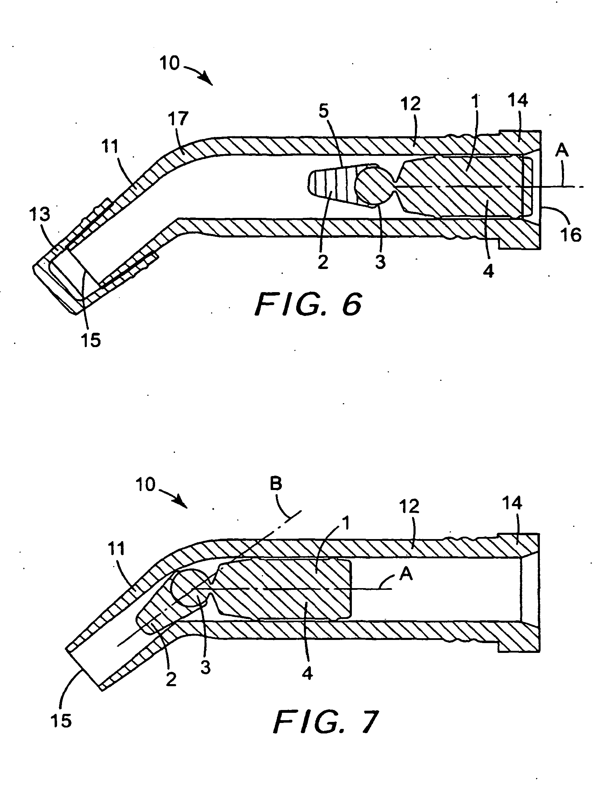

Figures 4 to 7 show an embodiment with a piston 1 having a joint or hinge 3, in these cases at least a portion of a ball joint 3. The joint 3 can be formed that it allows an axial guiding and inclination or deflection of the front section 2 relative to the rear section 4 when the piston 1 is pushed through the barrel 17 and into the front section 2. In Figures 4 and 5 the ball joint is not positively locked together. In the embodiments shown in Figures 6 to 7 a positively locking ball joint 3 is shown which would also allow the front section 2 to be pulled backwards by the rear section 4. That is, when the piston 1 is pulled backward by the user, both the rear section 4 and the front section 2 in Figures 6 and 7 are retracted because they remain connected together by the ball joint. Moreover, these embodiments allow inclination by the front section 2 due to a reduced cross-section behind the joint 3, so that there is space for the portion of the ball joint surrounding the ball (see Fig. 7).

Figures 8 and 9 show an embodiment with a piston 1 having a front section 2 with a reduceable cross section not provided by the compressibility of the material, but instead provided by structural modification of the front section 2. For example, in the illustrated embodiment a slotted front section 2 is provided, the portions of which are moved toward each other by the force of the passageway wherein the density of the material the piston 1 and the components of the piston's front section 2 are made of remains at least essentially constant. In this embodiment at least a portion of the front section 2 of the piston 1 comprises at least one longitudinal slot 7, preferably extending from the front end 8 of the piston 1 towards the rear end 9 of the piston 1. More preferably the longitudinal slot 7 completely splits the front section 2 at least along a part of its length, so that the front section 2 can be compressed without compressing the material it is made of itself. Even more preferably the entire front section 2 comprises a plurality of longitudinal slots 7 positioned essentially equidistantly radially around the longitudinal axis B. Preferably there are 4 such slots 7, or 2 crossing slots 7, dividing the front section 2 into quarters along at least a portion of the length thereof. Grooves, notches, or other similar structures can be provided alternatively or additionally.

In the embodiments shown the rear section 4 of the piston 1 has two radially extending portions 6 in order to provide a tight seal, while displaying acceptable frictional forces relative to moving the piston 1 within the barrel 17. The diameter of these radially extending portions 6 of the piston 1 is preferably in a range of 1 to 6 mm and more preferably in a range of 2 to 5 mm. A preferred embodiment comprises a piston 1 with radially extending portions 6 having a diameter of approximately 4.2 mm.

In Figures 2, 4, 6, and 8, the piston 1 is positioned at an initial position within the rear portion 12 of the barrel 17 close to the rear end 16 of the capsule 10. This is typically the position in which material is injected into and/or stored in the barrel 17. The barrel 17 may be provided with a sealing cap 13 or other device for closing the barrel 17, or with an application tip or syringe (not shown).

A predetermined amount of a material may be stored in the barrel 17 between the outlet 15 and the surface 5 of the piston 1. For convenience, the material to be dispensed by the piston 1 from the barrel 17 is not shown. Note that the barrel 17 could be filled with material from the front end (through the dispensing opening), the rear end, or even through an intermediate hole or port that is sealed before the capsule is used.

Capsule 10 preferably has a volume capacity of 150 to 300 mm³ and more preferably a volume capacity of 200 to 250 mm³. In this context the volume capacity is the free or available volume defined by the barrel 17 of the capsule between the outlet 15 of the capsule 10 and the surface 5 of the piston 1 facing the front portion 11 of barrel 17, when the piston 1 is placed at an initial position close to the rear end 16 of the capsule.

In Figures 3, 5, 7 and 9, the piston 1 is positioned at the front portion 11 of the barrel 17, whereby dead space is minimized in the passageway in the front portion 11 of the barrel 17. Only a small amount of material remains in this dead space, relative to amount of material remaining in a capsule with a conventional piston.

While the amount of paste remaining in a capsule with a conventional piston is typically more than 1/3 (e. g. approximately 37%) of the volume capacity, the piston 1 according to the present invention provides an amount of remaining paste of less than 1/4 (e.g. only approximately 22%) of the volume capacity. This results in significantly less waste, and thus savings for the manufacturer and the user.

The capsule 10 as described has an utilizable volume, which is the amount of paste which can be dispensed from the capsule 10 when the front section 2 of the piston 1 has been displaced to its end position within the front portion 11 of the barrel 17. The utilizable volume is preferably at least 65% of the volume capacity. More preferably the utilizable volume is at least 78% of the volume capacity.

An attaching member, such as an annular flange member 14 may be provided for attaching the capsule 10 to a dispensing device 100 (shown in Fig. 11) having a plunger for dispensing material from the barrel 17. Capsule 10 may also be provided together with such a dispensing device 100.

Fig. 11 shows a dental capsule 10 according to the present invention placed in a dispensing device 100 for expelling dental material from the capsule 10, wherein the capsule 10 may comprise a piston 1 according to the invention. The dispensing device also includes a plunger, which pushes on the piston 1 within the capsule 10 to expel the material in the manner described above. Capsules of the present invention may be designed to fit conventional dispensers, and may be packaged and sold together with such dispensers or applicators.

The present invention is not limited to the specific illustrated embodiments but by the features of the claims.

### List of reference numerals:

- 1: Piston
- 2: Front section of piston
- 3: Living hinge/joint
- 4: Rear section of piston
- 5: front surface of piston
- 6: seals at piston
- 7: slots at front section of piston
- 8: front end of piston
- 9: rear end of piston

- 10: Capsule
- 11: Front portion of barrel
- 12: Rear portion of barrel
- 13: Cap for barrel
- 14: Attaching member
- 15: Outlet of capsule
- 16: Rear end of capsule
- 17: Barrel

- 100: Dispensing device

- A: Longitudinal axis of rear section of piston
- B: Longitudinal axis of front section of piston

## Claims

1. A piston (1) for a dental capsule (10), the piston (1) being displaceable within the capsule (10), the piston (1) comprising:
(a) a front section (2) extending along longitudinal axis (B), and
(b) a rear section (4) with a longitudinal axis (A),
(c) wherein the piston (1) is shaped such that the front section (2) can be inclined in at least one dimension relative to the longitudinal axis (A) of the rear section (4), and
wherein the outer diameter of the front section of the piston is smaller than the outer diameter of at least part of the rear section of the piston, and
(d) a joint (3) connecting the front section (2) with the rear section (4),
wherein the joint (3) is a living hinge, **characterized in that**
the living hinge is formed by a portion narrowed at least in one dimension.

2. A piston (1) for a dental capsule (10), the piston (1) being displaceable within the capsule (10), the piston (1) comprising:
(a) a front section (2) extending along longitudinal axis (B), and
(b) a rear section (4) with a longitudinal axis (A),
(c) wherein the piston (1) is shaped such that the front section (2) can be inclined in at least one dimension relative to the longitudinal axis (A) of the rear section (4), and wherein
the outer diameter of the front section of the piston is smaller than the outer diameter of at least part of the rear section of the piston, and
(d) a joint (3) connecting the front section (2) with the rear section (4), **characterized in that** at least a portion of the joint (3) is a ball joint.

3. A piston (1) for a dental capsule (10), the piston (1) being displaceable within the capsule (10), the piston (1) comprising:
(a) a front section (2) extending along longitudinal axis (B), and
(b) a rear section (4) with a longitudinal axis (A),
(c) wherein the piston (1) is shaped such that the front section (2) can be inclined in at least one dimension relative to the longitudinal axis (A) of the rear section (4), and
wherein the outer diameter of the front section of the piston is smaller than the outer diameter of at least part of the rear section of the piston,
**characterized in that**
at least a portion of the front section (2) of the piston (1) comprises at least one longitudinal slot (7) providing flexibility to a front end of the piston (1) to enable the front section (2) to be inclined relative to the rear section (4) of the piston.

4. Piston according to any one of the preceding claims, wherein the piston (1) is shaped such that the front section (2) extending along longitudinal axis (B) can be inclined in any dimension relative to the longitudinal axis (A) of the rear section (4).

5. Piston according to any one of the preceding claims, wherein the front section (2) and the rear section (4) of piston (1) are made of the same material.

6. Piston according to any one of the preceding claims, wherein the piston (1) is made out of at least one thermoplastic material, selected from among polypropylene, polyethylene, polyoxymethylene, polyamide, polystyrene, polycarbonate, polybutadienterephtalate.

7. Piston according to any one of the preceding claims, wherein at least a portion of the front section (2) of the piston (1) is essentially conical.

8. A dental capsule comprising
(a) a barrel (17) having front and rear portions (11, 12), wherein the front portion (11) has a longitudinal axis that is angled relative to the longitudinal axis of the rear portion, and
(b) a piston (1) according to any one of the preceding claims being disposed and longitudinally displaceable within the barrel (17).

9. Capsule according to claim 8, wherein the barrel (17) comprises:
(a) a front portion (11) and
(b) a rear portion (12),
(c) wherein the front portion (11) has a passageway with an outlet (15), and a longitudinal axis of at least a portion of the passageway being inclined with respect to the longitudinal axis of the rear portion (12) and the remaining part of the front portion (11).

10. Capsule according to claim 9, wherein the passageway of the front portion (11) at least along a portion thereof decreases in its inner cross-section towards the outlet (15).

11. Capsule according to claim 9 or 10, wherein the front section (2) of the piston (1) and the passageway of the front portion (11) of the barrel (17) essentially correspond in shape so that when the piston (1) is within the front portion (11) of the barrel (17) the dead space in the passageway is minimized.

12. Capsule according to any of claims 8 to 11, wherein at least a part of the barrel (17) is filled with dental material.

13. Capsule according to any of claims 8 to 12, wherein the barrel (17) has an attachment member (14) for attaching it to a dispensing device (100) that includes a plunger.

14. Kit for delivery of dental material, comprising:
at least one capsule (10) containing dental material, particularly according to any of claims 8 to 13, comprising a piston (1) according to any of claims 1 to 7; and
a dispensing device (100), wherein the capsules (10) are adapted to be attached to the dispensing device (100), the dispensing device (100) being adapted to push the piston (1) forward to dispense the dental material from the capsule (10).

## Patentansprüche

1. Kolben (1) für eine dentale Kapsel (10), wobei der Kolben (1) innerhalb der Kapsel (10) verschiebbar ist, mit:
(a) einem sich entlang Längsachse (B) erstreckenden Vorderabschnitt (2), und
(b) einem Hinterabschnitt (4) mit einer Längsachse (A),
(c) wobei der Kolben (1) derart geformt ist, dass der Vorderabschnitt (2) in mindestens einer Ausdehnung relativ zur Längsachse (A) des Hinterabschnitts (4) geneigt werden kann, und
wobei der Außendurchmesser des Vorderabschnitts des Kolbens kleiner ist als der Außendurchmesser mindestens eines Teils des Hinterabschnitts des Kolbens, und
(d) einem Anschlussstück (3), der den Vorderabschnitt (2) mit dem Hinterabschnitt (4) verbindet, wobei das Anschlussstück (3) ein Filmscharnier ist, **dadurch gekennzeichnet, dass** das Filmscharnier durch einen mindestens in einer Ausdehnung geschmälerten Abschnitt ausgebildet ist.

2. Kolben (1) für eine dentale Kapsel (10), wobei der Kolben (1) innerhalb der Kapsel (10) verschiebbar ist, mit:
(a) einem sich entlang Längsachse (B) erstreckenden Vorderabschnitt (2), und
(b) einem Hinterabschnitt (4) mit einer Längsachse (A),
(c) wobei der Kolben (1) derart geformt ist, dass der Vorderabschnitt (2) in mindestens einer Ausdehnung relativ zur Längsachse (A) des Hinterabschnitts (4) geneigt werden kann, und wobei
der Außendurchmesser des Vorderabschnitts des Kolbens kleiner ist als der Außendurchmesser mindestens eines Teils des Hinterabschnitts des Kolbens, und
(d) einem Anschlussstück (3), das den Vorderabschnitt (2) mit dem Hinterabschnitt (4) verbindet, **dadurch gekennzeichnet, dass** mindestens ein Teil des Anschlussstücks (3) ein Kugelgelenk ist.

3. Kolben (1) für eine dentale Kapsel (10), wobei der Kolben (1) innerhalb der Kapsel (10) verschiebbar ist, mit:
(a) einem sich entlang Längsachse (B) erstreckenden Vorderabschnitt (2), und
(b) einem Hinterabschnitt (4) mit einer Längsachse (A),
(c) wobei der Kolben (1) derart geformt ist, dass der Vorderabschnitt (2) in mindestens einer Ausdehnung relativ zur Längsachse (A) des Hinterabschnitts (4) geneigt werden kann, und
wobei der Außendurchmesser des Vorderabschnitts des Kolbens kleiner ist als der Außendurchmesser mindestens eines Teils des Hinterabschnitts des Kolbens, **dadurch gekennzeichnet, dass** mindestens ein Teil des Vorderabschnitts (2) des Kolbens (1) mindestens einen Längsschlitz (7) aufweist, der einem Stirnende des Kolbens (1) eine Flexibilität verleiht, so dass der Vorderabschnitt (2) relativ zum Hinterabschnitt (4) des Kolbens geneigt werden kann.

4. Kolben nach einem der vorhergehenden Ansprüche, wobei der Kolben (1) derart geformt ist, dass der sich entlang der Längsachse (B) erstreckende Vorderabschnitt (2) in einer beliebigen Ausdehnung relativ zur Längsachse (A) des Hinterabschnitts (4) geneigt werden kann.

5. Kolben nach einem der vorhergehenden Ansprüche, wobei der Vorderabschnitt (2) und der Hinterabschnitt (4) des Kolbens (1) aus dem gleichen Material bestehen.

6. Kolben nach einem der vorhergehenden Ansprüche, wobei der Kolben (1) aus mindestens einem thermoplastischen Material hergestellt ist, ausgewählt aus Polypropylen, Polyethylen, Polyoxymethylen, Polyamid, Polystyrol, Polycarbonat und Polybutadienterephtalat.

7. Kolben nach einem der vorhergehenden Ansprüche, wobei mindestens ein Teil des Vorderabschnitts (2) des Kolbens (1) im Wesentlichen kegelförmig ist.

8. Dentale Kapsel, mit:
(a) einem Lauf (17) mit Vorder- und Hinterteil (11, 12), wobei das Vorderteil (11) eine Längsachse aufweist, die relativ zur Längsachse des Hinterteils im Winkel steht, und
(b) einem Kolben (1) gemäß einem der vorhergehenden Ansprüche, der innerhalb des Laufs (17) angeordnet und längs darin verschiebbar ist.

9. Kapsel nach Anspruch 8, wobei der Lauf (17) Folgendes aufweist:
(a) ein Vorderteil (11) und
(b) ein Hinterteil (12),
(c) wobei das Vorderteil (11) einen Kanal mit einem Auslass (15) aufweist und eine Längsachse des mindestens einen Teils des Kanals bezüglich der Längsachse des Hinterteils (12) und des restlichen Teils des Vorderteils (11) geneigt ist.

10. Kapsel nach Anspruch 9, wobei sich der Kanal des Vorderteils (11) mindestens entlang einem Teil davon in seinem Innendurchschnitt in Richtung des Auslasses (15) verringert.

11. Kapsel nach Anspruch 9 oder 10, wobei der Vorderabschnitt (2) des Kolbens (1) und der Kanal des Vorderteils (11) des Laufs (17) im Wesentlichen in ihrer Form übereinstimmen, derart, dass der Totraum im Kanal minimal ist, wenn sich der Kolben (1) innerhalb des Vorderteils (11) des Laufs (17) befindet.

12. Kapsel nach einem der Ansprüche 8 bis 11, wobei mindestens ein Teil des Laufs (17) mit Dentalmaterial gefüllt ist.

13. Kapsel nach einem der Ansprüche 8 bis 12, wobei der Lauf (17) ein Anbringungsglied (14) zu seiner Anbringung an einer Abgabeeinrichtung (100), die einen Stößel aufweist, hat.

14. Kit zur Lieferung von Dentalmaterial, mit:
mindestens einer Kapsel (10), die Dentalmaterial enthält, insbesondere nach einem der Ansprüche 8 bis 13, aufweisend einen Kolben (1) nach einem der Ansprüche 1 bis 7; und einer Abgabeeinrichtung (100), wobei die Kapseln (10) derart ausgelegt sind, dass sie an der Abgabeeinrichtung (100) angebracht sind, wobei die Abgabeeinrichtung (100) ausgelegt ist zum Vorwärtsdrücken des Kolbens (1), um das Dentalmaterial aus der Kapsel (10) abzugeben.

## Revendications

1. Piston (1) pour une capsule dentaire (10), le piston (1) pouvant se déplacer à l'intérieur de la capsule (10), le piston (1) comprenant :
a) une section avant (2) s'étendant le long d'un axe longitudinal (B), et
b) une section arrière (4) avec un axe longitudinal (A),
c) le piston (1) ayant une forme telle qu'on peut incliner la section avant (2) dans au moins une dimension par rapport à l'axe longitudinal (A) de la section arrière (4), et
le diamètre extérieur de la section avant du piston étant inférieur au diamètre extérieur d'au moins une partie de la section arrière du piston, et
d) une jonction (3) reliant la section avant (2) à la section arrière (4),
la jonction (3) étant une charnière vive,
**caractérisé en ce que** la charnière vive est constituée par une partie rétrécie au moins dans une dimension.

2. Piston (1) pour une capsule dentaire (10), le piston (1) pouvant se déplacer à l'intérieur de la capsule (10), le piston (1) comprenant :
a) une section avant (2) s'étendant le long d'un axe longitudinal (B), et
b) une section arrière (4) avec un axe longitudinal (A),
c) le piston (1) ayant une forme telle qu'on peut incliner la section avant (2) dans au moins une dimension par rapport à l'axe longitudinal (A) de la section arrière (4), et
le diamètre extérieur de la section avant du piston étant inférieur au diamètre extérieur d'au moins une partie de la section arrière du piston, et
d) une jonction (3) reliant la section avant (2) à la section arrière (4), **caractérisé en ce qu'**au moins une partie de la jonction (3) est une articulation sphérique.

3. Piston (1) pour une capsule dentaire (10), le piston (1) pouvant se déplacer à l'intérieur de la capsule (10), le piston (1) comprenant :
a) une section avant (2) s'étendant le long d'un axe longitudinal (B), et
b) une section arrière (4) avec un axe longitudinal (A),
c) le piston (1) ayant une forme telle qu'on peut incliner la section avant (2) dans au moins une dimension par rapport à l'axe longitudinal (A) de la section arrière (4), et
le diamètre extérieur de la section avant du piston étant inférieur au diamètre extérieur d'au moins une partie de la section arrière du piston,
**caractérisé en ce qu'**au moins une partie de la section avant (2) du piston (1) comprend au moins une fente longitudinale (7) donnant de la flexibilité à une extrémité avant du piston (1) pour permettre d'incliner la section avant (2) par rapport à la section arrière (4) du piston.

4. Piston selon l'une quelconque des revendications précédentes, dans lequel le piston (1) a une forme telle qu'on peut incliner la section avant (2) s'étendant le long de l'axe longitudinal (B) dans n'importe quelle dimension par rapport à l'axe longitudinal (A) de la section arrière (4).

5. Piston selon l'une quelconque des revendications précédentes, dans lequel la section avant (2) et la section arrière (4) du piston (1) sont faites de la même matière.

6. Piston selon l'une quelconque des revendications précédentes, dans lequel le piston (1) est fait d'au moins une matière thermoplastique choisie dans le groupe constitué de polypropylène, polyéthylène, polyoxyméthylène, polyamide, polystyrène, polycarbonate et polybutadiène téréphtalate.

7. Piston selon l'une quelconque des revendications précédentes, dans lequel au moins une partie de la section avant (2) du piston (1) est essentiellement conique.

8. Capsule dentaire comprenant :
a) un cylindre (17) comportant des parties avant et arrière (11, 12), dans lequel l'axe longitudinal de la partie avant (11) fait un angle avec l'axe longitudinal de la partie arrière, et
b) un piston (1) selon l'une quelconque des revendications précédentes, disposé à l'intérieur du cylindre (17) et pouvant se déplacer longitudinalement dans celui-ci.

9. Capsule selon la revendication 8, dans laquelle le cylindre (17) comprend :
a) une partie avant (11), et
b) une partie arrière (12),
c) dans laquelle la partie avant (11) comporte une voie de passage avec une sortie (15), l'axe longitudinal d'au moins une partie de la voie de passage étant incliné par rapport à l'axe longitudinal de la partie arrière (12) et au reste de la partie avant (11).

10. Capsule selon la revendication 9, dans laquelle la voie de passage de la partie avant (11), au moins sur une partie de celle-ci, a sa section transversale intérieure qui diminue vers la sortie (15).

11. Capsule selon la revendication 9 ou 10, dans laquelle la section avant (2) du piston (1) et la voie de passage de la partie avant (11) du cylindre (17) ont des formes pour l'essentiel homologues, de sorte que quand le piston (1) est à l'intérieur de la partie avant (11) du cylindre (17) l'espace mort dans la voie de passage est réduit au minimum.

12. Capsule selon l'une quelconque des revendications 8 à 11, dans laquelle au moins une partie du cylindre (17) est remplie de produit dentaire.

13. Capsule selon l'une quelconque des revendications 8 à 12, dans laquelle le cylindre (17) comporte un élément de fixation (14) pour le fixer sur un dispositif distributeur (100) qui comprend un poussoir.

14. Trousse pour l'administration de produit dentaire, comprenant :
au moins une capsule (10) contenant du produit dentaire, en particulier selon l'une quelconque des revendications 8 à 13, comprenant un piston (1) selon l'une quelconque des revendications 1 à 7 ; et
un dispositif distributeur (100),
dans laquelle les capsules (10) sont aptes à être fixées sur le dispositif distributeur (100), ledit dispositif distributeur (100) étant apte à pousser le piston (1) vers l'avant pour administrer le produit dentaire à partir de la capsule (10).
